# EUROPEAN PATENT APPLICATION

(11) **EP 4 614 249 A1**
(43) Date of publication of application: **10.09.2025**
(21) Application number: 22964197.2
(22) Date of filing: 23.11.2022
(51) Int. Cl.: G05B 19/418

(54) **TEST FLOW PARSING METHOD AND APPARATUS, AND ELECTRONIC DEVICE AND STORAGE MEDIUM**

(30) Priority: 04.11.2022 CN 202211376175
(71) Applicant: Megarobo Technologies Co., Ltd., Beijing 102200 (CN)
(72) Inventor: ZHANG, Caifeng, Beijing 102200 (CN); LI, Gang, Beijing 102200 (CN)
(74) Representative: Hofmann, Matthias
(86) International application number: PCT/CN2022/133790
(87) International publication number: WO 2024/092900

(57) **Abstract**

Provided in the embodiments of the present invention are a test flow parsing method and apparatus, and an electronic device and a storage medium. The method comprises: acquiring control information of a flow control unit and service information of nodes in the flow control unit, wherein the control information is used for controlling the execution of the nodes in the flow control unit; determining the parsing order of the nodes in the control unit on the basis of a connection relationship between the nodes in the flow control unit, and the control information; and on the basis of the determined parsing order, configuring the service information of each node in a test flow to the corresponding node, and parsing the test flow into a plurality of ordered operations. Therefore, the workload of a user is greatly reduced, and a powerful guarantee is provided such that a test flow can be smoothly and accurately performed.

## Description

The present disclosure claims the priority to Chinese patent application No. 202211376175.3, titled "TEST FLOW PARSING METHOD AND APPARATUS, AND ELECTRONIC DEVICE AND STORAGE MEDIUM", filed on November 4, 2022 with the China National Intellectual Property Administration, which is incorporated herein by reference in its entirety.

### FIELD

The present disclosure relates to the technical field of automatic control, and in particular to a test process analysis method, a test process analysis apparatus, an electronic device, and a storage medium.

### BACKGROUND

At present, automation transformation is constantly being carried out in various technical fields to liberate manpower and improve efficiency. Automation systems are extensively used in automated manufacturing, automated inspection, automated testing, and other fields. Users may build the entire automation process using an interface provided by the automation system.

The built automation test process may be analyzed before execution so as to disassemble the entire automation test process into multiple minimum execution steps and assign tasks for each device to execute these minimum steps respectively. By allowing each device to complete its respective task, every minimum execution step is ensured to be carried out smoothly, thereby completing the entire automation process.

In the prior art, the above analysis process often requires user involvement, that is, users manually analyze the automation test process. This significantly increases the workload of the user, and it is difficult to ensure the accuracy of a manually analysis result, which may lead to the built automation process failing to execute normally.

### SUMMARY

In view of the above problem, the present disclosure is provided. In the present disclosure, a test process analysis method is provided. At least one process control unit is comprised in the test process. Each process control unit comprises one or more nodes. The method comprises: acquiring control information of the process control unit and service information of nodes in the process control unit, wherein the control information is to control execution of operations corresponding to the nodes in the process control unit; determining an analysis order of the nodes in the process control unit based on a connection relationship between the nodes in the process control unit, and the control information; and configuring, in accordance with the determined analysis order, the service information of each node in the test process to the corresponding node, and analyzing the test process into a plurality of ordered operations.

In an embodiment, the process control unit comprises a decision control unit and/or a loop control unit, the decision control unit comprising multiple branches, the determining the analysis order of the nodes in the process control unit based on the connection relationship between the nodes in the process control unit and the control information comprising: expanding, for the loop control unit, the loop control unit into N control sub-units that are connected serially according to information on a maximum number of loops, each control sub-unit being configured to perform a corresponding operation once, and determining the analysis order of the nodes in the control sub-unit based on the connection relationship between the nodes in the process control unit and the control information, wherein the control information comprises the information on the maximum number of loops, and N is equal to the maximum number of loops; and/or determining, for the decision control unit, an analysis order of nodes in each branch in the decision control unit based on decision variable information and a connection relationship between the nodes in each branch, wherein the control information comprises decision variable information which is to control execution of the branches in the decision control unit.

In an embodiment, the decision control unit comprises a first branch and a second branch, the first branch being a branch that the user desires to prioritize for execution, and the second branch being a branch other than the first branch, the determining, for the decision control unit, the analysis order of the nodes in each branch in the decision control unit based on decision variable information and the connection relationship between the nodes in each branch comprising: determining nodes in the first branch being analyzed prior to nodes in the second branch based on the decision variable information and the connection relationship between the nodes in each branch in the decision control unit.

In an embodiment, a device node is comprised in the loop control unit, service information of the device node comprising identifier information of the device node; the configuring, in accordance with the determined analysis order, the service information of node to the corresponding node, and analyzing the test process into the plurality of ordered operations comprising: in a first case where identifier information of a last device node in a previous control sub-unit is consistent with identifier information of a first device node in a subsequent control sub-unit, configuring the service information of the node to the corresponding node, omitting an analysis of a line between the previous control sub-unit and the subsequent control sub-unit, and analyzing the nodes in the previous control sub-unit and the subsequent control sub-unit into one or more ordered operations, respectively; and in a second case where the identifier information of the last device node in the previous control sub-unit is not consistent with the identifier information of the first device node in the subsequent control sub-unit, configuring the service information of the node to the corresponding node, analyzing the previous control sub-unit into one or more ordered operations, analyzing a line between the last device node and the first device node into a transporting operation, and analyzing the subsequent control sub-unit into one or more ordered operations.

In an embodiment, the service information of the device node comprises pre-operation and/or post-operation related information of the device node, and in the first case, when analyzing the nodes in the previous control sub-unit and the subsequent control sub-unit into one or more ordered operations respectively, post-operation related information of the last device node in the previous control sub-unit and/or pre-operation related information of the first device node in the subsequent control sub-unit are omitted; and in the second case, the configuring the service information of the node to the corresponding node comprising: configuring the pre-operation and/or post-operation related information of the device node to the corresponding node, wherein operations of the previous control sub-unit comprise post-operations of the last device node, and/or operations of the subsequent control sub-unit comprise pre-operations of the first device node.

In an embodiment, the determining the analysis order of the nodes in the process control unit based on the connection relationship between the nodes in the process control unit and the control information comprises: determining, for the process control unit, the analysis order recursively based on the connection relationship and the control information.

In an embodiment, the method also comprises: displaying a first user interface configured to display the test process, wherein each process control unit comprises a starting node and an ending node; the determining, for the process control unit, the analysis order recursively based on the connection relationship and the control information comprises: determining, when other process control units are nested layer by layer between the starting node and the ending node of the process control unit, the following analysis order based on the connection relationship and the control information: first, analysis from the starting node to a process control unit nested innermost; and then, analysis of to-be-analyzed nodes between the starting node and the ending node layer by layer in an order from nodes in the process control unit nested innermost to nodes in a process control unit nested outermost, until the ending node is analyzed.

In an embodiment, each process control unit comprises a loop control unit comprising a time constraint node, service information of the time constraint node comprising maximum loop time information of the loop control unit. The method also comprises: determining a constraint object of the time constraint node based on a connection relationship between the time constraint node and other nodes in the loop control unit. The configuring the service information of the node to the corresponding node based on the determined analysis order comprises: configuring the maximum loop time information on the constraint object, such that performing operations corresponding to the loop control unit is stopped when a time taken for the constraint object to perform an operation once exceeds a time corresponding to the maximum loop time information.

In an embodiment, the method also comprises: displaying a second user interface in response to a user operation, the second user interface being provided with an operable control for acquiring the control information of the process control unit and the service information of the nodes in the process control unit from a user.

In an embodiment, the method also comprises: configuring a dependency relationship between a device node and a control source node in the process control unit. Where in the control source node is an input node for the device node in the process control unit, and during the execution of the test process, the control source node is analyzed according to execution situation of a node ahead of the control source node in the test process.

According to another aspect of the present disclosure, a test process analysis apparatus is also provided. The apparatus comprises:
an information acquisition module, configured to acquire control information of process control unit and service information of nodes in the process control unit, wherein the control information is to control execution corresponding to the nodes in the process control unit;
a node analysis module, configured to determine an analysis order of the nodes in the process control unit based on a connection relationship between the nodes in the process control unit, and the control information; and
a process analysis module, configured to configure, in accordance with the determined analysis order, the service information of each node in the test process to the corresponding node, and analyzing the test process into a plurality of ordered operations.

According to another aspect of the present disclosure, an electronic device is also provided. The electronic device comprises a processor and a memory. Wherein the memory stores computer program instructions which, when executed by the processor, cause the test process analysis method as described above to be performed.

According to a further aspect of the present disclosure, a storage medium having program instructions stored thereon is also provided. The program instructions, when executed, cause the test process analysis method as described above to be performed.

According to the technical solution, a process control unit in a test process can be automatically analyzed. Therefore, in a case where a process control unit is comprised in the user-built test process, operations in the process control unit can be automatically performed based on the analysis results obtained after the process control unit is automatically analyzed, without a manual analyzing operation by the user. The workload of the user is greatly reduced, and a powerful guarantee is provided such that a test process can be smoothly and accurately performed.

The above description is merely an overview of the technical solutions of the present disclosure. Hereinafter detailed embodiments of the present disclosure are provided, such that technical means of the present disclosure are clarified and enabled according to content of the embodiments, and objectives, features, and advantages of embodiments of the present disclosure would become more intelligible.

### BRIEF DESCRIPTION OF THE DRAWINGS

Hereinafter drawings to be applied in embodiments of the present disclosure or in the prior art are briefly described, in order to illustrate technical solutions according to embodiments of the present disclosure or in the prior art more clearly. Apparently, the drawings in the following descriptions are only some embodiments of the present disclosure, and other drawings may be obtained by those skilled in the art based on the provided drawings without any creative effort.

Above and other objects, features, and advantages of the present disclosure will become more apparent with reference to the detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 illustrates a schematic flowchart of a test process analysis method according to an embodiment of the present disclosure;
FIG. 2 illustrates a schematic diagram of a test process built according to an embodiment of the present disclosure;
FIG. 3 illustrates a schematic diagram of three control sub-units obtained after a loop control unit in the test process shown in FIG. 2 is analyzed;
FIG. 4 illustrates a schematic diagram of two branches obtained after a decision control unit in the test process shown in FIG. 2 is analyzed;
FIG. 5 illustrates a schematic diagram of part of a test process displayed on a first user interface according to an embodiment of the present disclosure;
FIG. 6 illustrates a schematic diagram of part of a test process built according to another embodiment of the present disclosure;
FIG. 7 illustrates a schematic block diagram of a test process analysis apparatus according to an embodiment of the present disclosure; and
FIG. 8 illustrates a schematic block diagram of an electronic device according to an embodiment of the present disclosure.

### DETAILED DESCRIPTION

Exemplary embodiments of the present disclosure are described in detail with reference to the drawings to make purposes, solutions, and advantages of the present disclosure more apparent. Apparently, the described embodiments are only part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts should fall within the scope of protection of the present disclosure.

As described above, with the development of automation technology, automation systems have been applied in various fields to realize automation transformation. Users may build an entire automation process using an interface provided by the automation system. For the built automation process, it needs to be analyzed before execution. For example, the built test process comprises the following: according to preset conditions, a sample plate is transferred to a high-content cell imaging analyzer or an incubator after being pipetted from a pipetting workstation. The corresponding process is analyzed as follows: first, a robotic arm of the automation system transfers the sample plate to an entrance plate position of the pipetting workstation; next, a transfer module in the pipetting workstation transfers the sample plate from the entrance plate position to a pipetting operation area, and the pipetting workstation performs a pipetting operation; then, the transfer module in the pipetting workstation transfers the sample plate from the pipetting operation area to an exit plate position; and finally, it may be determined whether to perform a first operation or a second operation based on the comparison between a number of cells in the sample plate and a preset threshold, and in the first operation, the robotic arm of the automation system transfers the sample plate from the exit plate position of the pipetting workstation to an entrance of the high-content cell imaging analyzer, and in the second operation, the robotic arm of the automation system transfers the sample plate from the exit plate position of the pipetting workstation to an entrance of the incubator. If the above analysis process is all implemented by a user through a manual operation, it can not only increase the workload of the user, making the process analyzing time-consuming, but also make it difficult to ensure the accuracy of the analysis result.

In order to address the above technical problem, a test process analysis method is provided in the present disclosure. With this analysis method, the test process can be automatically and quickly analyzed before execution.

In an embodiment, at least one process control unit may be comprised in the test process. Each of the process control units may comprise one or more nodes, comprising a device node and a control node, as well as multiple device nodes. The process control unit is configured to control the execution route of the test process. The device node corresponds to a specific device in the test process. The control node is configured to control the execution of the nodes in the process control unit, and does not correspond to a specific device in the test process. The process control unit may comprise a decision control unit, a loop control unit, and the like. The decision control unit comprises multiple branches. For the analyzed decision control unit, during the execution of the test process, only operations corresponding to the nodes on the branch of the unit that meets the decision conditions are performed. For the analyzed loop control unit, during the execution of the test process, the operations corresponding to the nodes in the unit are sequentially repeatedly performed until a loop exit condition is met.

FIG. 1 illustrates a schematic flowchart of a test process analysis method 100 according to an embodiment of the present disclosure. As shown in FIG. 1, the analysis method 100 may comprise step S110 to step S130.

In step S110, control information of a process control unit and service information of nodes in the process control unit are acquired. The control information is to control an execution of operations corresponding to the nodes in the process control unit.

For example, a host computer may receive the control information of the process control unit and the service information of the nodes from a user. The host computer may provide a visual interface to the user. Based on the visual interface, the user may input the control information of the process control unit and the service information of the nodes through an input device (such as a mouse, keyboard, etc.) of the host computer. The control information may be configured for controlling the execution of the nodes in the process control unit. In a specific embodiment, when building a test process, the user may input the control information of the process control unit through an input device. The control information specifically comprises, for example, information on a maximum number of loops, loop exit condition information, and the like of the loop control unit, and decision variable information of the decision control unit. Alternatively, the service information of the nodes may be stored in advance in a storage device of the host computer. The service information may be preset node information and/or node information set when building a test process. The service information of the nodes comprises attribute information, operation information related to operations, and the like. The attribute information may be the name, function of the nodes, and identifier information of the device nodes, and the like; the operation information comprises operation instructions executed by the nodes correspondingly, execution time, pre-operation and/or post-operation related information of the device nodes, and the like; and the service information of the nodes may comprise preset node information and node information set when building a test process. The service information of the nodes may comprise the name, function, operation instructions executed correspondingly, execution time, and the like of the nodes. Similarly, in a specific embodiment, when building a test process, the user may input node information set during this process through an input device. The node information set when building a test process specifically comprises, for example, identifier information and pre-operation and/or post-operation related information of the device nodes, etc. The pre-operations of a device node are performed by the execution device for the pre-operations before enabling the device corresponding to the device node to perform its self-operations, and the post-operations of a device node are performed by the execution device for the post-operations after enabling the device corresponding to the device node to performs its self-operations. The execution device of the pre-operations and/or post-operations may be the same as or different from the device corresponding to the device node. For the nodes corresponding to the preset node information, if such nodes are involved in the built test process, the host computer can retrieve the preset node information from the storage device. The preset node information comprises, for example, service information of a device node in the test process, such as parameter information comprising the function, location, etc., of the device corresponding to the device node. It can be understood that the preset node information may be set in advance by the user through an input device and a visual interface before a test process is built, or may be set by the device or apparatus and the like corresponding to the nodes at the time of leaving the factory. Here, "preset" may refer to a building process prior to the test process.

In step S120, an analysis order of the nodes in the process control unit is determined based on a connection relationship between the nodes in the process control unit, and the control information.

As described above, in a case where the process control unit is a loop control unit, the control information may comprise information on a maximum number of loops, loop exit condition information, and the like. For example, based on the information on the maximum number of loops, it may be determined, after a last node in the loop control unit is analyzed, whether to continue analyzing a first node in the loop control unit, or to exit the loop control unit and analyze a next adjacent node after the loop control unit. In a case where the process control unit is a decision control unit, the control information may comprise decision variable information or the like. Based on the decision variable information, it may be determined which branch of the decision control unit to analyze.

It can be understood that the nodes in the process control unit may have at least one input node and at least one output node, respectively. In other words, each of these nodes is connected to at least two other nodes. These input nodes and output nodes may also serve as current nodes respectively, and may have their own input nodes and output nodes. The input or output relationship, i.e., the connection relationship between the nodes, may be determined by the direction of the lines connecting each node. According to the connection relationship between the nodes, each node may be sorted sequentially. For example, for a node in the loop control unit or in a branch of the decision control unit, its sorting is after its input node and before its output node. Nodes that appear earlier in the order of node sorting are analyzed preferentially. Nodes that appear later in the order of node sorting are analyzed later. Thus, the analysis order of the nodes in the process control unit can be determined.

In step S130, based on the determined analysis order, service information of each node in the test process is configured to the corresponding node, and the test process is analyzed into a plurality of ordered operations.

In an embodiment, after the analysis order of the nodes in the process control unit is determined in step S120, the service information of the nodes acquired in step S110 may be populated into each corresponding node. Thus, a sequence of nodes having a certain analysis order and containing service information therein can be obtained. By analyzing the nodes sequentially according to the order of the nodes in the sequence, step information corresponding to each node may be obtained, such as what kind of operation to be performed by the device corresponding to the node, execution time of such operation and the like. Thereafter, according to the order of the nodes in the sequence, the step information corresponding to all of the analyzed nodes in the process control unit is concatenated to obtain multiple operations arranged in order. Based on the multiple operations arranged in order, the test process may be executed in order.

According to the above technical solution, the automatic analyzing of process control units in a test process can be realized. Therefore, in a case where a process control unit is comprised in the user-built test process, operations in the process control unit can be automatically performed based on an analysis result obtained after the process control unit is automatically analyzed, without a manual analyzing operation by the user. The workload of the user is greatly reduced, and a powerful guarantee is provided such that a test process can be smoothly and accurately executed.

In an embodiment, the method 100 may also comprise: displaying a second user interface in response to a user operation, the second user interface being provided with an operable control for acquiring control information of the process control unit and service information of the nodes in the process control unit from the user.

It can be understood that in order to facilitate user operation, a visual interface may be provided to the user for human-computer interaction. Users may click on the control, which leads to the second user interface, on the visual interface through an input device such as a mouse, to display the second user interface on the visual interface. The second user interface is provided with an operable control. The operable control may be configured to acquire control information of a process control unit and service information of nodes in the process control unit in response to a user operation. The operable control may be a text input box, a filter box, or the like.

Accordingly, users may input the control information of the process control unit and the service information of the nodes in the visual form of the second user interface, which facilitates the user operation and improves the user experience.

In an embodiment, the process control unit may comprise a decision control unit and/or a loop control unit. The decision control unit may comprise multiple branches. Each of the branches comprises at least one node.

Step S120 of determining the analysis order of the nodes in the process control unit based on a connection relationship between the nodes in the process control unit and the control information, may comprise the following steps.

In step S121, for the loop control unit, it is expanded into N control sub-units that are connected serially according to information on the maximum number of loops, each of the control sub-units being configured to perform a corresponding operation once, and the analysis order of the nodes in the control sub-unit is determined based on the connection relationship between the nodes in the process control unit and the control information. The control information comprises information on a maximum number of loops, and N is equal to the maximum number of loops.

FIG. 2 illustrates a schematic diagram of a test process built according to an embodiment of the present disclosure. In this embodiment, a decision control unit and a loop control unit are comprised in the test process. The loop control unit is illustrated in FIG. 2 as comprising all nodes between a node "LoopStart" and a node "LoopEnd" inclusively. "LoopStart" is a starting node of the loop control unit. "LoopEnd" is an ending node of the loop control unit. Two device nodes are contained in the loop control unit. The devices corresponding to the two device nodes are microplate washer and microplate reader respectively.

In an embodiment, an interface for setting control information of the loop control unit may comprise an "exit condition" control for setting a loop exit condition. A "loop time" control is configured to set a maximum number of loops. In this embodiment, the maximum number of loops of the loop control unit is 3. The loop exit condition is: count%2==0. Here, count may indicate a number of cells on the cell plate. The loop exit condition may indicate that during the execution of the test process, operations corresponding to the loop control unit are stopped performing when count is an even number. As a result, the loop control unit is expanded into three control sub-units connected in series, each of which is configured to be executed once.

FIG. 3 illustrates a schematic diagram of three control sub-units obtained after the loop control unit in the test process shown in FIG. 2 is analyzed. As shown in FIG. 3, a microplate washer and a microplate reader are sequentially connected in each control sub-unit. A device corresponding to a first device node of a first control sub-unit, a microplate washer, is connected to a cell plate on its left. It can be understood that the cell plate belongs to a consumable node, and serves as an input node for the microplate washer at this time. The device corresponding to the first device node, the microplate washer, is connected to a device corresponding to a second device node, a microplate reader, on its right. Similarly, the connection relationship between device nodes in a second control sub-unit and a third control sub-unit may be obtained. Therefore, it can be determined that in this embodiment, the analysis order of the nodes in the control sub-unit is: microplate washer → microplate reader. In addition, based on the loop maximum number information, it may be determined that, after a last device node in the third control sub-unit in the loop control unit is analyzed, the next node to be analyzed is an ending node of the loop control unit. It can be understood that the device corresponding to the device node in the loop control unit performs a corresponding operation at least once.

In this embodiment, the loop representation node "Loop", the starting node "LoopStart", and the ending node "LoopEnd" of the loop control unit may be used collectively to indicate a location of the loop control unit. Therefore, the operation object of the operation of populating the service information of the node to the corresponding node may not involve the above loop representation node, the starting node, and the ending node. The analyzed control sub-units in the above loop control unit may not comprise the above nodes.

In step S122, for the decision control unit, the analysis order of the nodes in each branch is determined based on decision variable information and a connection relationship between the nodes in each branch in the decision control unit,. The control information comprises the decision variable information, which is used to control the execution of the branches in the decision control unit

The decision control unit is shown in FIG. 2 as comprising all nodes between "Decision" and "Decision End" inclusively. Here, "Decision" is a starting node of the decision control unit. "Decision End" is an ending node of the decision control unit. The decision control unit shown in FIG. 2 comprises two branches. A device node is contained on each branch. FIG. 4 illustrates a schematic diagram of two branches obtained after the decision control unit in the test process shown in FIG. 2 is analyzed. The branch shown in the upper part of FIG. 4 is a "true" branch, and the branch shown in the lower part of FIG. 4 is a "false" branch. The device corresponding to the device node on the "true" branch is a high-content cell imaging device. The device corresponding to the device node on the "false" branch is an incubator. During analyzing, the "true" branch may be analyzed first, followed by the "false" branch. Alternatively, the "false" branch may be analyzed first, followed by the "true" branch. When analyzing a decision control unit, each branch may be taken as a analyzing unit. After all nodes on one branch are analyzed, all nodes on the next branch are analyzed until all branches of the decision control unit are analyzed. For all nodes on each branch in the decision control unit, the analysis order of the nodes on each branch may be determined according to the connection relationship between the nodes.

In an embodiment, the visual interface may comprise an interface for setting control information of the decision control unit. A "condition" control may be comprised in this interface, for setting decision variable information. Assume that the decision variable information is: count>10. Here, "count" may indicate a number of cells on the cell plate. During the execution of the test process, if the number of cells on the cell plate is greater than the aforementioned threshold of 10, the "true" branch is executed. In this embodiment, the operation corresponding to the device node on the "true" branch is taking a picture by a high-content cell imaging device. Conversely, if the number of cells on the cell plate is not greater than the aforementioned threshold of 10, the "false" branch is executed. In this embodiment, the operation corresponding to the device node on the "false" branch is incubating in an incubator.

It can be understood that although two branches are comprised in the decision control unit shown in FIG. 2, the decision control unit may comprise three or more branches according to the specific execution requirements of the test.

It can be understood that step S121 and step S122 are only two specific execution steps of a process control unit, and the order of their execution is determined according to the locations of the loop control unit and the decision control unit in the test process during actual execution.

For the loop control unit and the decision control unit, targeted analyzing may be performed with the above solution. For the loop control unit, it is disassembled into control sub-units for analyzing. For the decision control unit, it is disassembled into branches for analyzing. Thus, more accurate analysis results of the loop control unit and the decision control unit can be obtained while ensuring the automation of the analysis process.

In an embodiment, the decision control unit may comprise a first branch and a second branch. The first branch is a branch that the user desires to prioritize for execution. The second branch is a branch other than the first branch.

In a specific embodiment, step S122 of determining, for the decision control unit, the analysis order of the nodes in each branch based on decision variable information and a connection relationship between the nodes in each branch in the decision control unit, may comprise: determining the nodes in the first branch being analyzed prior to the nodes in the second branch based on the decision variable information and the connection relationship between the nodes in each branch in the decision control unit.

Referring again to FIG. 2, in the embodiment shown in FIG. 2, the decision control unit comprises two branches. The "true" branch may be a branch that the user desires to prioritize for execution. The "false" branch is the other branch. When determining the analysis order, all nodes in the "true" branch may be analyzed prior to all nodes in the "false" branch.

Accordingly, the branch that the user wishes to execute first may be analyzed prior to the other branch. Users may customize the analysis order of branches as required, which meets the requirements of different users.

In an embodiment, a device node may be comprised in the loop control unit. The service information of the device node may comprise identifier information of the device node. The identifier information is used for uniquely identifying a device corresponding to the device node.

In this embodiment, step S130 of configuring the service information of the node to the corresponding node based on the determined analysis order, and analyzing the test process into a plurality of ordered operations, may comprise the following steps.

In step S131, in a first case where the identifier information of the last device node in the previous control sub-unit is consistent with the identifier information of the first device node in the subsequent control sub-unit, the service information of the node is configured to the corresponding node, the analyzing of the line between the previous control sub-unit and the subsequent control sub-unit is omitted, and the nodes in the previous control sub-unit and the subsequent control sub-unit are analyzed into one or more ordered operations, respectively.

Referring again to FIG. 3, the first control sub-unit is the previous control sub-unit relative to the second control sub-unit. Similarly, the second control sub-unit is the subsequent control sub-unit relative to the first control sub-unit. For example, in a case where the identifier information of the last device node of the first control sub-unit is consistent with the identifier information of the first device node of the second control sub-unit, the identifier information of the last device node of the first control sub-unit and the identifier information of the first device node of the second control sub-unit both indicate that the device corresponding to the device node is an incubator. Further, the line between the first control sub-unit and the second control sub-unit is not analyzed. At the same time, the nodes in the first control sub-unit and the second control sub-unit are analyzed into one or more ordered operations, respectively. The process of repeatedly culturing the cells in an incubator may be comprised in the operation. It can be understood that in this case, there is no need to perform an operation such as transporting the cell plate between the first control sub-unit and the second control sub-unit.

In step S132, in a second case where the identifier information of the last device node in the previous control sub-unit is not consistent with the identifier information of the first device node in the subsequent control sub-unit, the service information of the node is configured to the corresponding node, the previous control sub-unit is analyzed into one or more ordered operations, the line between the last device node and the first device node is analyzed into a transporting operation, and the subsequent control sub-unit is analyzed into one or more ordered operations.

Likewise, referring again to FIG. 3, the first control sub-unit is the previous control sub-unit relative to the second control sub-unit. Similarly, the second control sub-unit is the subsequent control sub-unit relative to the first control sub-unit. When the identifier information of the last device node of the first control sub-unit is not consistent with the identifier information of the first device node of the second control sub-unit, for example, in the embodiment shown in FIG. 3, the identifier information of the last device node of the first control sub-unit indicates that the device corresponding to the device node is a microplate washer. The identifier information of the first device node in the second control sub-unit indicates that the device corresponding to the device node is a microplate reader. The service information of the node is configured to the corresponding node. Thereafter, first, the first control sub-unit is analyzed into one or more ordered operations. Next, the line between the microplate reader in the first control sub-unit and the microplate washer in the second control sub-unit is analyzed as a transporting operation, that is, when performing this step, the cell plate is transported from the microplate reader to the microplate washer. Finally, the second control sub-unit is analyzed into one or more ordered operations. In this embodiment, operations obtained after analyzing may comprise: first, the cell plate is transferred into a microplate washer, and the microplate washer performs a plate washing operation; next, a robotic arm of the automation system transports the cell plate from the microplate washer to the microplate reader, and the microplate reader performs a enzyme-linked immunosorbent assay (ELISA) operation. It can be understood that the above operations belong to operations of the first control sub-unit. Then, the robotic arm of the automation system transports the cell plate from the microplate reader to the microplate washer. In both the second control sub-unit and the third control sub-unit, the operations in the aforementioned first control sub-unit may be repeatedly performed. The execution step of the loop control unit ends after exiting the loop when the loop exit condition is met, or after the operations corresponding to the three control sub-units are performed.

The above steps S131 and S132 are execution steps corresponding to different cases regarding whether the identifier information of the last device node in the previous control sub-unit is consistent with the identifier information of the first device node in the subsequent control sub-unit. It can be understood that only execution steps corresponding to one of the cases are performed in actual execution.

Accordingly, based on whether the identifier information of the last device node in the previous control sub-unit is consistent with the identifier information of the first device node in the subsequent control sub-unit, the loop control unit may be accurately analyzed into different operations respectively. In the first case, the analyzing of the line between the previous control sub-unit and the subsequent control sub-unit may be omitted, thereby reducing unnecessary analyzing operations and improving process analyzing efficiency.

In an embodiment, the service information of a device node may also comprise pre-operation and/or post-operation related information of the device node. The pre-operation related information may comprise a name of the execution device for performing the pre-operations, and pre-operation instructions. The post-operation related information may comprise a name of the execution device for performing the post-operations, and post-operation instructions. In the aforementioned first case, when the nodes in the previous control sub-unit and the subsequent control sub-unit are analyzed into one or more ordered operations, respectively, the post-operation related information of the last device node in the previous control sub-unit and/or the pre-operation related information of the first device node in the subsequent control sub-unit are omitted.

As mentioned above, in the first case, the device corresponding to the last device node of the previous control sub-unit and the device corresponding to the first device node in the subsequent control sub-unit are both incubators. It can be understood that the operation corresponding to the loop control unit at this time may be represented as a same incubator performing an incubation operation on the same cell plate in different time periods. In other words, during this process, no other operations need to be performed besides the incubation operation. Therefore, it is not necessary to analyze the pre-operation and/or post-operation related information of the device node where the incubator is located.

In the second case, configuring the service information of the node to the corresponding node may comprise: configuring the pre-operation and/or post-operation related information of the device node to the corresponding node, wherein operations of the previous control sub-unit comprise the post-operations of the last device node, and/or operations of the subsequent control sub-unit comprise the pre-operations of the first device node.

Specifically, for example, the device corresponding to the last device node of the previous control sub-unit is a centrifuge, which may have post-operation related information. Specifically, after the centrifuge performs its own centrifugation operation, the sample plate is to be placed at an exit plate position of the centrifuge. Thus, the centrifuge may be provided with a post-operation: plate out. Plate out may refer to the operation of moving the sample plate from a centrifugation working area, i.e. a centrifuge basket, to the exit plate position of the centrifuge by the transfer module in the centrifuge. The device corresponding to the first device node of the subsequent control sub-unit may be a microplate reader. The microplate reader may have pre-operation related information. Specifically, a door of the microplate reader needs to be opened before the sample plate is moved onto a tray of the microplate reader by the robotic arm of the automation system. Thus, the microplate reader may be provided with a pre-operation: opening the door. Opening the door may refer to the operation of opening the door of the microplate reader by the robotic arm.

Thus, in the course of test process configuration, the pre-operations and/or post-operations supported by some devices in the automation system may be configured in advance directly for that device. There is no need to separately add nodes about these pre-operations and post-operations in a process building interface, which makes the process interface simpler, effectively avoids errors in the test process, and saves the time and effort of engineers. As a result, the smooth completion of the test process is effectively guaranteed. In addition, the above solution ensures that all operations contained in this node are correctly analyzed and each operation is sorted. This ensures the accuracy of the analysis results, which in turn facilitates the smooth execution of the test process.

In an embodiment, step S120 of determining the analysis order of the nodes in the process control unit based on a connection relationship between the nodes in the process control unit and the control information, may comprise: determining, for the process control unit, the analysis order recursively based on the connection relationship and the control information.

It can be understood that recursion may be a way of analyzing that converts a process control unit into smaller sub-units to determine the analysis order of the nodes in the process control unit. For example, a process control unit may have one or more layers of other process control units nested within it. The process control units may be analyzed generally in a hierarchical order from the inner layer to the outer layer to determine the analysis order of the nodes therein, respectively.

Determining the analysis order of process control units recursively has the advantages of simple algorithm, easy implementation, and the like. Meanwhile, it can ensure the logical accuracy of the test process analysis process, thereby ensuring the accuracy of the analysis results.

In an embodiment, the method 100 may also comprise: displaying a first user interface. The first user interface is configured to display a test process. Each of the process control units in the test process comprises a starting node and an ending node. FIG. 5 illustrates a schematic diagram of part of a test process displayed on a first user interface according to an embodiment of the present disclosure.

Step S123 of determining, for the process control unit, the analysis order recursively based on the connection relationship and the control information, comprises: when there are other process control units nested layer by layer between the starting node and the ending node of the process control unit, determining the following analysis order based on the connection relationship and the control information: first, analysis from the starting node to the process control unit nested innermost; and then, analysis of to-be-analyzed nodes between the starting node and the ending node layer by layer in an order from nodes in the process control unit nested innermost to nodes in the process control unit nested outermost, until the ending node is analyzed.

In the embodiment shown in FIG. 5, three decision control units are comprised. The decision control unit 3 comprises all nodes between "Decision3" and "Decision End3" inclusively. The decision control unit 2 comprises all nodes between "Decision2" and "Decision End2" inclusively. It can be understood that the decision control unit 3 is nested within the decision control unit 2. The decision control unit 1 comprises all nodes between "Decision1" and "Decision End1" inclusively. Similarly, the decision control unit 2 is nested within the decision control unit 1. When analyzing, it is analyzed from the starting node, which is "Decision1" in this embodiment, to the decision control unit 3 nested innermost. The analysis order may be: "Decision1"→"Decision2"→"Decision3". All nodes in the decision control unit 3 nested innermost are then analyzed. The specific analysis process of the decision control unit has been described above in detail, and is not repeated here for the sake of brevity. Then, unanalyzed nodes between "Decision1" and "Decision End1" are analyzed layer by layer in the order from "Decision End3" to the outermost decision control unit 1. The specific analysis order may be: "Decision End3" → nodes on the "false" branch of the decision control unit 2 → "Decision End2" → "Decision End1".

It can be understood that in the test process shown in FIG. 5, there are no nodes between the starting nodes of each decision control unit and between the ending nodes of each decision control unit. If there are other nodes between the starting nodes, the nodes between the two starting nodes may be analyzed between the respective analysis processes of the two starting nodes. For example, assuming that there are other nodes between "Decision1" and "Decision2" in the test process shown in FIG. 5, the other nodes that are present are analyzed sequentially after "Decision1" is analyzed, and then "Decision2" is analyzed. If there are other nodes between the ending nodes, then the other nodes that are present are analyzed sequentially after the ending node in the process control unit nested in the inner layer is analyzed. After all the other nodes that are present are analyzed, the unanalyzed nodes in the process control unit nested in the outer layer are analyzed. For example, assuming that there are other nodes between "Decision End3" and "Decision End2" in the test process shown in FIG. 5, the other nodes that are present are analyzed sequentially after "Decision End3" is analyzed, and then nodes on the "false" branch of the decision control unit 2 are analyzed.

Therefore, it can be ensured that all nodes in the test process are analyzed, and the accuracy of the analysis order of the nodes is ensured.

As mentioned above, the process control unit may comprise a loop control unit. In an embodiment, the loop control unit comprises a time constraint node. The service information of the time constraint node comprises maximum loop time information of the loop control unit. FIG. 8 illustrates a schematic diagram of an interface of setting a time constraint node according to an embodiment of the present disclosure. As shown in FIG. 8, the "Max-duration Time" control is used to set the maximum loop time.

The method 100 may also comprise: determining a constraint object of the time constraint node based on a connection relationship between the time constraint node and other nodes in the loop control unit.

Referring again to FIG. 2, the time constraint node is shown in FIG. 2 as a "Time Constraint" node. In the embodiment shown in FIG. 2, the left end and the right end of the time constraint node are respectively connected to the input of the microplate washer and the output of the microplate reader in the loop control unit. The constraint objects of this time constraint node are: "microplate washer ", "microplate reader" and the line between them.

In this example, step S130 of configuring the service information of the node to the corresponding node according to the determined analysis order, may comprise: configuring the maximum loop time information to the constraint object, to exit the loop control unit, that is, stop performing operations corresponding to the loop control unit when the time taken for the constraint object to perform an operation once exceeds the time corresponding to the maximum loop time information.

In an embodiment, it is assumed that the maximum loop time is set to 30 minutes. Correspondingly, the maximum loop time information is configured to the "microplate washer", the "microplate reader", and the line between them. The sum of the time for the microplate washer to perform a plate washing operation once, the time for the microplate reader to perform an enzyme-linked immunosorbent assay operation once, and the time for the robotic arm of the automation system to perform a transporting operation once - the transporting time to transport the sample plate from the microplate washer to the microplate reader does not exceed the maximum loop time of 30 minutes. When the sum of the three exceeds 30 minutes, performing the operations corresponding to the loop control unit is stopped, and it proceeds to perform operations corresponding to the next node or unit.

Thus, with the time constraint node, the execution time of the constraint object constrained by it may be further limited, which is beneficial for the accurate loop control of the loop control unit and the smooth execution of the subsequent test process.

In an embodiment, the method 100 may also comprise: configuring a dependency relationship between a device node in the process control unit and a control source node, wherein the control source node is an input node for the device node in the process control unit. In other words, the control source node and the device node are adjacent to each other. The execution of the device node depends on the analyzing of the control source node. During the execution of the test process, the control source node is analyzed according to the execution situation of the node ahead of the control source node in the test process.

After the test process is analyzed and multiple operations analyzed in the test process are performed, the multiple operations may be dynamically programmed according to the operation situation of the actual test process. It can be understood that the script for the execution of the test process and the variable such as the number of cells on the aforementioned cell plate can be known when the test process is actually executed. For example, decision variable information set by the user is that the number of cells on the cell plate is greater than the threshold. The system defaults to preferentially execute the "true" branch, i.e., performing the photography operation by the high-content cell imaging device. When the number of cells on the cell plate is less than or equal to the threshold, a "false" branch, i.e., performing incubation operation in the incubator, is executed. During the actual execution of the test process, when the decision control unit is to be executed, the operations may be dynamically programmed according to the comparison between the number of cells on the cell plate at that time and the threshold. The corresponding Gantt chart also changes in real time according to the actual situation.

FIG. 6 illustrates a schematic diagram of part of a test process built according to another embodiment of the present disclosure. As shown in FIG. 6, "pipetting workstation" indicates that the node is a device node. As can be easily seen from FIG. 6, the pipetting workstation has two inputs. One of the inputs is the "true" branch of the decision control unit 3, and the other is a cell plate. The consumable node where the cell plate is located may be regarded as a control source node. The control source node is the input node of the pipetting workstation. A dependency relationship between the device node and the control source node in the process control unit is configured. During the execution of the test process, the control source node is analyzed according to the execution situation of the node ahead of the control source node in the test process. In the embodiment shown in FIG. 6, the node in the test process that is ahead of the control source node's cell plate position is a node "Decision3". The node "Decision3" indicates that there is a decision control unit here. The decision control unit has a "true" branch and a "false" branch. In a case where the node "Decision3" is executed and the execution result indicates that the "true" branch of the decision control unit is executed, the cell plate is analyzed. Otherwise, the cell plate node is not analyzed.

In the above solution, the control source node is analyzed when the analyzing condition is met, thereby ensuring the efficient analyzing of the control source node. That is, the control source node is analyzed only when the operations corresponding to the device node of which the control source node serves as the input can be actually executed. This avoids invalid analyzing operations and speeds up the analysis of the test process.

According to a second aspect of the present disclosure, a test process analysis apparatus is also provided. FIG. 7 illustrates a schematic block diagram of a test process analysis apparatus 700 according to an embodiment of the present disclosure. As shown in FIG. 7, the apparatus 700 comprises an information acquisition module 710, a node analysis module 720, and a process analysis module 730.

The information acquisition module 710 is configured to acquire control information of a process control unit and service information of nodes in the process control unit. The control information is to control the execution of the nodes in the process control unit. The service information comprises preset node information and node information set when building a test process.

The node analysis module 720 is configured to determine the analysis order of operations corresponding to the nodes in the process control unit based on a connection relationship between the nodes in the process control unit, and the control information.

The process analysis module 730 is configured to configure the service information of each node in the test process to the corresponding node based on the determined analysis order, and analyze the test process into a plurality of ordered operations.

In an embodiment, the node analysis module 720 may comprise a loop control unit node analysis module and a decision control unit node analysis module.

The loop control unit node analysis module is configured to expand, for the loop control unit, the loop control unit into N control sub-units that are connected serially according to information on a maximum number of loops, each control sub-unit being configured to perform once, and determine the analysis order of nodes in the control sub-unit based on a connection relationship between the nodes in the process control unit and the control information, wherein the control information comprises the information on the maximum number of loops, and N is equal to the maximum number of loops.

The decision control unit node analysis module is configured to determine, for the decision control unit, the analysis order of nodes in each branch in the decision control unit based on decision variable information and a connection relationship between the nodes in each branch, wherein the decision variable information is comprised in the control information, and is configured for controlling the execution of the branches in the decision control unit.

In an embodiment, the decision control unit node analysis module may specifically be configured to determine nodes in the first branch being analyzed prior to nodes in the second branch based on the decision variable information and the connection relationship between the nodes in each branch in the decision control unit.

In an embodiment, the node analysis module 720 may comprise a decision analysis module.

The decision analysis module may be configured to configure, in a first case where the identifier information of the last device node in the previous control sub-unit is consistent with the identifier information of the first device node in the subsequent control sub-unit, the service information of the node to the corresponding node, omit the analyzing of the line between the previous control sub-unit and the subsequent control sub-unit, and analyze the nodes in the previous control sub-unit and the subsequent control sub-unit into one or more ordered operations, respectively.

The decision analysis module may also be configured to configure, in a second case where the identifier information of the last device node in the previous control sub-unit is not consistent with the identifier information of the first device node in the subsequent control sub-unit, the service information of the node to the corresponding node, analyze the previous control sub-unit into one or more ordered operations, analyze the line between the last device node and the first device node into a transporting operation, and analyze the subsequent control sub-unit into one or more ordered operations.

In the first case, the decision analysis module may be specifically configured to omit the pre-operation and/or post-operation related information of the last device node in the previous control sub-unit and the first device node in the subsequent control sub-unit, when the nodes in the previous control sub-unit and the subsequent control sub-unit are analyzed into one or more ordered operations, respectively.

In the second case, the decision analysis module may be specifically configured to configure the pre-operation and/or post-operation related information of the device node to the corresponding node, wherein the operations of the previous control sub-unit comprise the post-operations of the last device node, and/or the operations of the subsequent control sub-unit comprise the pre-operations of the first device node.

In an embodiment, the node analysis module may comprise a recursive analysis module.

The recursive analysis module may be configured to determine, for the process control unit, the analysis order recursively based on the connection relationship and the control information.

In an embodiment, the test process analysis apparatus 700 may also comprise a display module. The display module may be configured to display a first user interface for displaying the test process, wherein each of the process control units comprises a starting node and an ending node.

The recursive analysis module may be specifically configured to determine, when other process control units are nested layer by layer between the starting node and the ending node of the process control unit, the following analysis order based on the connection relationship and the control information: first, analysis from the starting node to the process control unit nested innermost; and then, analysis of to-be-analyzed nodes between the starting node and the ending node layer by layer in an order from the nodes in the process control unit nested innermost to the nodes in the process control unit nested outermost, until the ending node is analyzed.

In an embodiment, the test process analysis apparatus 700 may also comprise a constraint object determination module. The constraint object determination module is configured to determine a constraint object of the time constraint node based on a connection relationship between the time constraint node and other nodes in the loop control unit.

The process analysis module 730 may be specifically configured to configure the maximum loop time information on the constraint object, so as to exit the loop control unit when the time taken for the constraint object to perform an operation once exceeds the time corresponding to the maximum loop time information.

In an embodiment, the test process analysis apparatus 700 may also comprise a display module. The display module may display a second user interface in response to a user operation. The second user interface is provided with an operable control for acquiring control information of the process control unit and service information of the nodes in the process control unit from the user.

In an embodiment, the test process analysis apparatus 700 may also comprise a dependency relationship configuration module. The dependency relationship configuration module is configured to configure the dependency relationship between the device node in the process control unit and the control source node, wherein the control source node is an input node for the device node in the process control unit, and during the execution of the test process, the control source node is analyzed according to the execution situation of the device node ahead of the control source node in the test process.

According to a third aspect of the present disclosure, an electronic device is also provided. FIG. 8 illustrates a schematic block diagram of an electronic device 800 according to an embodiment of the present disclosure. As shown in FIG. 8, the electronic device 800 may comprise a processor 810 and a memory 820. The memory 820 stores computer program instructions that, when executed by the processor 810, cause the test process analysis method as described above to be performed.

According to a fourth aspect of the present disclosure, a storage medium is also provided. The program instructions are stored on the storage medium, and when executed, cause the test process analysis method as described above to be performed. The storage medium may comprise, for example, a storage component of a tablet computer, a hard disk of a personal computer, a read-only memory (ROM), an erasable programmable read-only memory (EPROM), a portable compact disk read-only memory (CD-ROM), a USB memory, or any suitable combination of the above. The computer-readable storage medium may be any combination of one or more computer-readable storage media.

Specific implementation solutions of the above test process analysis apparatus, the electronic device and the storage medium may be understood by those skilled in the art by reading the above description of the test process analysis method, which is not described in detail herein for brevity.

Although the exemplary embodiments have been described herein with reference to the drawings, it should be understood that the above embodiments are merely exemplary and are not intended to limit the scope of the present disclosure. Many changes and modifications may be made by those skilled in the art without departing from the scope and spirit of the present disclosure. All such changes and modifications are deemed to fall within the scope of the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may implement the described functionality in various manners for each specific application, while such implementations should not be considered to be beyond the scope of the present disclosure.

In the embodiments according to the present disclosure, it should be understood that the disclosed apparatus and method may be implemented in other forms. For example, the device embodiments described hereinabove are only schematic. For example, the division of the units is only based on logical functions, and there may be other division ways in actual implementation, such as multiple units or components can be combined or integrated into another device, or some features can be neglected or not executed.

In the specification provided herein, a lot of specific details are described. However, it may be appreciated that the embodiments of the present disclosure may be practiced without these specific details. In some instances, well-known methods, structures and technologies are not described in detail so as not to obscure the understanding of this specification.

Similarly, it should be understood that in order to simplify the present disclosure and help to understand one or more of the various aspects of the application, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed application requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, wherein each claim itself serves as an independent embodiment of the present disclosure.

It may be understood by those skilled in the art that, except for mutually exclusive features, all features disclosed in this specification (including the claims, abstract and drawings) and all processes or units of any method or device disclosed in this specification can be combined in any way. Unless otherwise expressly stated, each feature disclosed in this specification (including the claims, abstract and drawings) may be replaced by an alternative feature that provides the same, equivalent or similar purpose.

In addition, it may be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. It should be understood by those skilled in the art that a microprocessor or a digital signal processor (DSP) may be used in practice to implement some or all functions of some modules of the test process analysis apparatus according to the embodiments of the present disclosure. The present disclosure may also be implemented as a device program (e.g., a computer program and a computer program product) for executing a part of or the entire method described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" does not exclude the presence of elements or steps not listed in the claims. The word "a" or "an" preceding an element does not exclude the presence of a plurality of such elements. The present disclosure may be implemented by means of hardware comprising several different elements and by means of a suitably programmed computer. In a unit claim enumerating several apparatuses, several of these apparatuses may be embodied by a same hardware item. The use of the words "first", "second", and "third", etc. does not indicate any order. These words may be interpreted as names.

The descriptions hereinabove are merely specific embodiments of the present disclosure or explanations of the specific embodiments. The scope of the present disclosure is not limited thereto. Any variations or substitutions made by those skilled in the art within the technical scope disclosed in the present disclosure are deemed to fall within the scope of the present disclosure. The scope of the present disclosure is based on the scope of the claims.

## Claims

1. A test process analysis method, wherein at least one process control unit is comprised in a test process, each process control unit comprising one or more nodes, and the method comprises:
acquiring control information of the process control unit and service information of nodes in the process control unit, wherein the control information is to control execution of operations corresponding to the nodes in the process control unit;
determining an analysis order of the nodes in the process control unit based on a connection relationship between the nodes in the process control unit, and the control information; and
configuring, in accordance with the determined analysis order, the service information of each node in the test process to the corresponding node, and analyzing the test process into a plurality of ordered operations.

2. The method according to claim 1, wherein the process control unit comprises a decision control unit and/or a loop control unit, the decision control unit comprising a plurality of branches,
the determining the analysis order of the nodes in the process control unit based on the connection relationship between the nodes in the process control unit and the control information comprising:
expanding, for the loop control unit, the loop control unit into N control sub-units that are connected serially according to information on a maximum number of loops, each control sub-unit being configured to perform a corresponding operation once, and determining the analysis order of the nodes in the control sub-unit based on the connection relationship between the nodes in the process control unit and the control information, wherein the control information comprises the information on the maximum number of loops, and N is equal to the maximum number of loops; and/or
determining, for the decision control unit, an analysis order of nodes in each branch in the decision control unit based on decision variable information and a connection relationship between the nodes in each branch, wherein the control information comprises the decision variable information , which is to control execution of the branches in the decision control unit.

3. The method according to claim 2, wherein the decision control unit comprises a first branch and a second branch, the first branch being a branch that a user desires to prioritize for execution, and the second branch being a branch other than the first branch,
the determining, for the decision control unit, the analysis order of the nodes in each branch in the decision control unit based on decision variable information and the connection relationship between the nodes in each branch comprising:
determining nodes in the first branch being analyzed prior to nodes in the second branch based on the decision variable information and the connection relationship between the nodes in each branch in the decision control unit.

4. The method according to claim 2, wherein a device node is comprised in the loop control unit, and service information of the device node comprises identifier information of the device node;
the configuring, in accordance with the determined analysis order, the service information of each node in the test process to the corresponding node, and analyzing the test process into the plurality of ordered operations comprising:
in a first case where identifier information of a last device node in a previous control sub-unit is consistent with identifier information of a first device node in a subsequent control sub-unit, configuring the service information of the node to the corresponding node, omitting an analysis of a line between the previous control sub-unit and the subsequent control sub-unit, and analyzing the nodes in the previous control sub-unit and the subsequent control sub-unit into one or more ordered operations, respectively; and
in a second case where the identifier information of the last device node in the previous control sub-unit is not consistent with the identifier information of the first device node in the subsequent control sub-unit, configuring the service information of the node to the corresponding node, analyzing the previous control sub-unit into one or more ordered operations, analyzing a line between the last device node and the first device node into a transporting operation, and analyzing the subsequent control sub-unit into one or more ordered operations.

5. The method according to claim 4, wherein the service information of the device node comprises pre-operation and/or post-operation related information of the device node,
in the first case, when analyzing the nodes in the previous control sub-unit and the subsequent control sub-unit into one or more ordered operations respectively, post-operation related information of the last device node in the previous control sub-unit and/or pre-operation related information of the first device node in the subsequent control sub-unit are omitted; and
in the second case, the configuring the service information of the node to the corresponding node comprising:
configuring the pre-operation and/or post-operation related information of the device node to the corresponding node, wherein operations of the previous control sub-unit comprise post-operations of the last device node, and/or operations of the subsequent control sub-unit comprise pre-operations of the first device node.

6. The method according to any one of claims 1 to 5, wherein the determining the analysis order of the nodes in the process control unit based on the connection relationship between the nodes in the process control unit and the control information comprising:
determining, for the process control unit, the analysis order recursively based on the connection relationship and the control information.

7. The method according to claim 6, further comprising:
displaying a first user interface configured to display the test process, wherein each process control unit comprises a starting node and an ending node;
the determining, for the process control unit, the analysis order recursively based on the connection relationship and the control information comprising:
determining, when other process control units are nested layer by layer between the starting node and the ending node of the process control unit, the following analysis order based on the connection relationship and the control information: first, analysis from the starting node to a process control unit nested innermost; and then, analysis of to-be-analyzed nodes between the starting node and the ending node layer by layer in an order from nodes in the process control unit nested innermost to nodes in a process control unit nested outermost, until the ending node is analyzed.

8. The method according to any one of claims 1 to 5, wherein each process control unit comprises a loop control unit comprising a time constraint node, service information of the time constraint node comprising maximum loop time information of the loop control unit,
the method further comprises:
determining a constraint object of the time constraint node based on a connection relationship between the time constraint node and other nodes in the loop control unit;
the configuring, in accordance with the determined analysis order, the service information of the node to the corresponding node comprising:
configuring the maximum loop time information on the constraint object, such that performing operations corresponding to the loop control unit is stopped when a time taken for the constraint object to perform an operation once exceeds a time corresponding to the maximum loop time information.

9. The method according to any one of claim 1 to 5, further comprising:
displaying a second user interface in response to a user operation, the second user interface being provided with an operable control for acquiring the control information of the process control unit and the service information of the nodes in the process control unit from a user.

10. The method according to any one of claim 1 to 5, further comprising:
configuring a dependency relationship between a device node and a control source node in the process control unit, wherein the control source node is an input node for the device node in the process control unit, and during the execution of the test process, the control source node is analyzed according to execution situation of a node ahead of the control source node in the test process.

11. A test process analysis apparatus, comprising:
an information acquisition module, configured to acquire control information of process control unit and service information of nodes in the process control unit, wherein the control information is to control execution of the nodes in the process control unit;
a node analysis module, configured to determine an analysis order of operations corresponding to the nodes in the process control unit based on a connection relationship between the nodes in the process control unit, and the control information; and
a process analysis module, configured to configure, in accordance with the determined analysis order, the service information of each node in the test process to the corresponding node and analyzing the test process into a plurality of operations that are orderly.

12. An electronic device, comprising a processor and a memory, wherein the memory stores computer program instructions which, when executed by the processor, cause the test process analysis method of any one of claims 1 to 10 to be performed.

13. A storage medium, storing program instructions, and the program instructions, when executed, cause the test process analysis method of any one of claims 1 to 10 to be performed.
